# EUROPEAN PATENT APPLICATION

(11) **EP 1 536 545 A2**
(43) Date of publication of application: **01.06.2005**
(21) Application number: 04028242.8
(22) Date of filing: 29.11.2004
(51) Int. Cl.: H02K 15/02

(54) **Electric motor, electric motor manufacturing method, and electric motor manufacturing device**

(30) Priority: 28.11.2003 JP 2003400138
(71) Applicant: Koyo Seiko Co., Ltd., Osaka-shi, Osaka 542-0081 (JP)
(72) Inventor: Matsubara, Ken, Osaka-shi Osaka 542-0081 (JP)
(74) Representative: Steil, Christian, Dipl.-Ing.

(57) **Abstract**

An electric motor (1) is equipped with a housing (2). The housing (2) comprises a main housing body (8), with which a cylindrical part (13) and a base (14) are formed integrally in one piece, and an end member (9). An opening (19) at a central part of the base (14) is blocked by a cover (20). A first subassembly (22), in which the main housing body (8) and a stator (7) and the like are assembled together, is heldby a first holding member (24) . A second subassembly (23), in which an output shaft (5), a rotor (6), the end member (9) and the like are assembled together, is held via first and second end parts (5a and 5b) of the output shaft (5) by a second holding member (23). By relative movement of the first and second holding members (24, 25), the first and second subassemblies (22 and 23) are assembled together.

## Description

### BACKGROUND OF THE INVENTION

### Field of the Invention

The present invention relates to an electric motor, to be used, for example, in an electric power steering device and the like of an automobile and the like, an electric motor manufacturing method, and an electric motor manufacturing device for carrying out the electric motor manufacturing method.

### Description of Related Arts

With electric power steering devices, there are cases where a brushless motor is used as an electric motor in order to achieve compact size and improvement of output. This electric motor comprises, for example, a housing, an output shaft rotatably supported on the housing via a pair of bearings, a rotor disposed in an integrally rotatable manner on the output shaft and a stator fixed inside the housing. The housing comprises a cup-shaped main housing body, an end part of which is closed and an end member, which closes the open end part of the main housing body. Also, a magnet is disposed on the rotor.

Such an electricmotor is usually assembled in the following manner. First, a cylindrical stator is fixed to the interior of the main housing body. Also, the rotor is fixed to the output shaft. Then, while supporting one end of the output shaft in a provisionally held state, the other end of the output shaft is incorporated inside the stator from the open end part of the main housing body. During the assembly and at the state when the assembly is completed, a predetermined gap is opened between the outer circumference of the rotor and the inner circumference of the stator. A tool may be used to secure this gap (see, for example, Japanese Unexamined Patent Publication No. 2000-116081, published by the Japan Patent Office on April 21, 2000).

However, with the art disclosed in Patent Document 1, in the process of incorporating the rotor that is held at one end into the stator, the rotor becomes strongly drawn into the stator due to the magnetic force of the magnet on the rotor, causing the rotor and the stator to contact each other strongly and thereby causing the rotor and the stator to become damaged. Damage tends to occur readily especially when a strong, rare earth magnet is used as the magnet. Such a problem exists in general not only with brushless motors but with electric motors with a cup-shaped main housing body in general.

An obj ect of the present invention is to provide an electric motor, an electric motor manufacturing method, and an electric motor manufacturing device for carrying out the manufacturing method, that are capable of restraining the rotor and the stator from being damaged during the assembly.

### SUMMARY OF THE INVENTION

A preferred mode of the present invention provides an electric motor equipped with a housing. This housing comprises a main housing body and an end member. The main housing body comprises a cylindrical part having first and second end parts, and a base continuous with the second end part. The cylindrical part and the base are formed integrally in one piece. The end member is mounted to the first end part of the cylindrical part. The electric motor is equipped with a stator fixed to the inner circumference of the cylindrical part of the main housing body and the first and second supporting parts disposed at the end member and the base, respectively. The electric motor also has an output shaft, having the first and second end parts and with which the first and second end parts are supported by the first and second supporting parts via first and second bearings, respectively. The electric motor is also equipped with a rotor disposed in an integrally rotatable manner on the output shaft, an opening formed at a central part of the base of the main housing body, and a cover opposing the second end part of the output shaft and covering the opening.

With this mode, when the output shaft with a rotor is incorporated in the main housing body with a stator in the assembly process, by supporting the first end part of the output shaft and by supporting the second end part of the output shaft by means of an assembly-aiding supporting shaft that is passed through the opening at the base of the main housing body, the output shaft can be held in a state in which both of its ends are held. The contacting of the rotor and the stator during assembly can thus be restrained, and as a result, damage to the rotor and the stator can be restrained. After the completion of assembly, the opening at the base of the main housing body is blocked by the cover.

### BRIEF DESCRIPTION OF THE DRAWINGS

Fig. 1 is a sectional view showing a general construction of an electric motor of an embodiment of the present invention.
Fig. 2 is a partial sectional view of a general construction of an electric motor manufacturing device of an embodiment of the present invention, also showing a part of the electric motor in an intermediate state of assembly.
Fig. 3 is a partial sectional view of a general construction of the manufacturing device shown in Fig. 2, also showing the electric motor in a more advanced stage of assembly than that shown in Fig. 2.
Fig. 4 is a partial sectional view of a general construction of the manufacturing device shown in Fig. 2, also showing the electric motor in a more advanced stage of assembly than that shown in Fig. 3.
Fig. 5 is a partial sectional view of a general construction of the manufacturing device shown in Fig. 2, also showing the electric motor in a more advanced stage of assembly than that shown in Fig. 4.
Fig. 6 is a partial sectional view of a general construction of the manufacturing device shown in Fig. 2, also showing the electric motor at a state when the assembly is completed.

### DETAILED DESCRIPTION OF THE PREFERRED EMBODIMENT

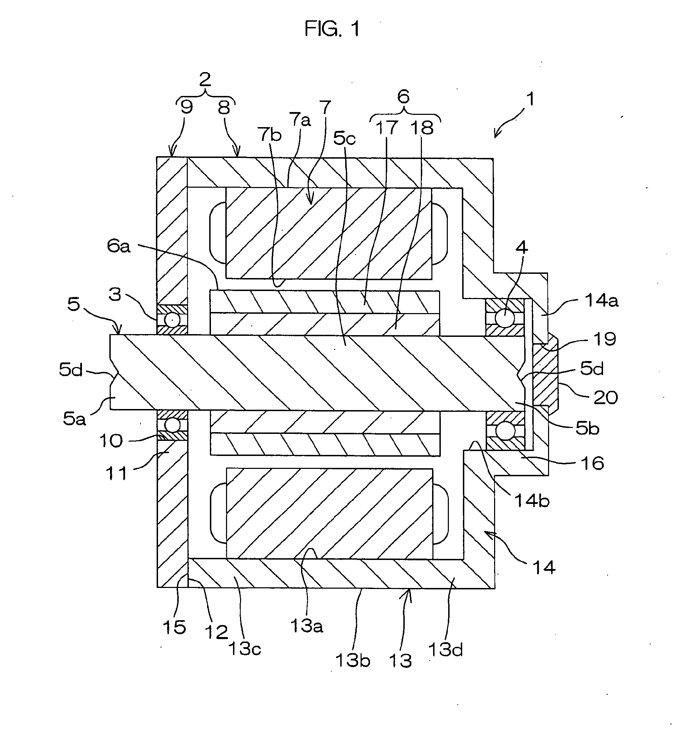

Embodiments of the present invention shall now be described in detail with reference to the attached drawings. Fig. 1 is a sectional view showing the general construction of an electric motor of an embodiment of the present invention.

This electric motor 1 has a housing 2, an output shaft 5 rotatably supported on the housing 2 via the first and second bearings 3 and 4, a cylindrically-shaped rotor 6 disposed in an integrally rotatable manner on the output shaft 5, and a stator 7 having a cylindrical shape and fixed to the interior of housing 2 so as to oppose the outer circumference 6a of rotor 6 in the radial direction.

The housing 2 has a main housing body 8 having a cylindrical shape with a base, and an end member 9 mounted to an open end part of the main housing body 8.

The end member 9 has a disk-like shape. The end member 9 is provided with a through hole 10 formed at a central part, and a first supporting member 11 formed of the peripheral part of the through hole 10 and supports the first bearing 3. A connecting part 12 for connecting with the main housing body 8 is provided on an outer peripheral part of the end member 9.

The main housing body 8 has a cylindrical part 13 and a base 14, and the cylindrical part 13 and the base 14 are formed integrally in one piece.

The cylindrical part 13 has an inner circumference 13a onto which an outer circumference 7a of the stator 7 is fixed, and an outer circumference 13b. The cylindrical part 13 also has a first end part 13c at the open side and a second end part 13d at the base 14 side. A connecting part 15 connectable to the connecting part 12 of the end member 9 is provided at the first end part 13c of the cylindrical part 13. The connecting parts 12 and 15 are fixed to each other bymeans of an unillustrated bolt. The outer peripheral edge of the base 14 is continuous with the second end part 13d of the cylindrical part 13.

At a central part 14a of the base 14, a cylindrically-shaped recess 14b, which opens to the inner side of the housing 2, is formed, and a second supporting part 16 formed of the peripheral edge part of the recess 14b and supporting the second bearing 4, is provided.

By forming the base 14 andthe cylindrical part 13 integrally, the number of parts is reduced, assembly can be made easy, and the concentricity of the second supporting part 16 formed on the base 14 and the inner circumference 13a of the cylindrical part 13 supporting the stator 7, can be made high in precision.

The output shaft 5 is formed of a long member. The output shaft 5 has a first end part 5a at the end member 9 side, a second end part 5b at the base 14 side, and an intermediate part 5c, onto which the rotor 6 is fixed. The first end part 5a is supported by the first supporting part 11 via the first bearing 3 and extends outward from the through hole 10 of the end member 9. The second end part 5b is supported by the second supporting part 16 via the second bearing 4 and is contained inside the housing 2. At the first and second end parts 5a and 5b are, respectively, formed conical recesses 5d, which make up a pair of positioning center holes that are provided for processing the output shaft 5 and serve as references for machining. Conical recesses 5d form conical shapes that are concentric to a central axial line of the output shaft 5.

The rotor 6 is disposed so as to rotate concentrically and integrally with a rotating shaft 5. The rotor 6 has a rotor magnet 17 and a spacer 18 which connects the rotor magnet 17 and the output shaft 5 to each other.

The stator 7 is positioned concentrically with respect to the rotor 6. An inner circumference 7b of the stator 7 opposes the outer circumference 6a of the rotor 6 across a predetermined interval.

An electricmotor 1 according to this embodiment is equipped with an opening 19 formed at the central part 14a of the base 14 of the main housing body 8, and a cover 20 which opposes the second end part 5b of the output shaft 5 across a gap and can block the opening 19.

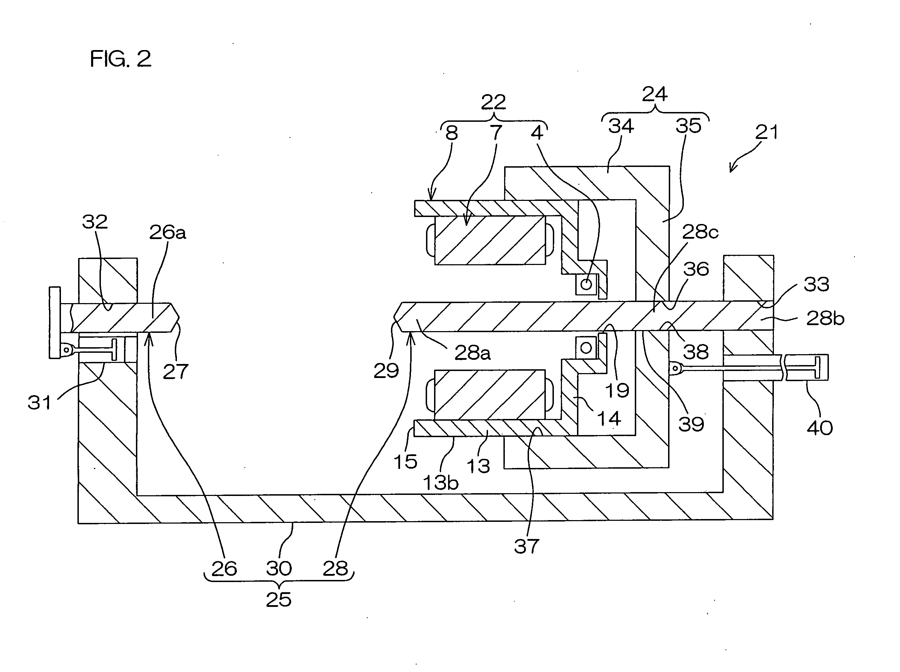

The opening 19 is open during the assembly and is provided for the insertion of the assembly-aiding supporting shaft for supporting the second end part 5b of the output shaft 5 during the assembly, that is, for example, a second supporting shaft 28 of a manufacturing device 21 to be described later (see Fig. 2) . The conical recess 5d at the second end part 5b of the output shaft 5 functions as an engaging part engageable with the second supporting shaft 28.

The cover 20 comprises a plug that can seal opening 19 in the state in which it is fitted into the opening 19. The plug is fixed irremovably to the opening 19 by caulking or other fixing method.

With the electric motor 1 according to this embodiment, in the process of incorporating the output shaft 5 with the rotor 6 in the main housing body 8 with the stator 7 while supporting the first end part 5a in the assembly process, the second end part 5b of the output shaft can also be supported by the assembly-aiding supporting shaft inserted through the opening 19 at the base 14 of the main housing body 8. The output shaft 5 can thus be held in a state in which both of its ends are held. As a result, the contacting of the rotor 6 and the stator 7 during the assembly can be restrained and the damage to the rotor 6 and the stator 7 can thus be restrained. Consequently, strict attention is not required for preventing such a damage.

The opening 19 can be blocked by means of the cover 20 after the completion of the assembly. Inadvertent entry of foreign matter into the interior of the housing 2 can thereby be prevented.

Since during assembly, the conical recess 5d, serving as a tapered engaging part of at least one of and more preferably both of the first and second end parts 5a and 5b of the output shaft 5 is arranged to be engaged with the assembly-aiding supporting shaft, the output shaft 5 can be held without play, and as a result, the contacting of the rotor 6 and the stator 7 and the damage to the rotor 6 and the stator 7 can be prevented.

With conical recesses 5d, which compose of center holes, the constructions required for processing the output shaft 5 can be used for the above-mentioned prevention of the damage, and thus an increase in the manufacturing cost of the output shaft 5 will not occur.

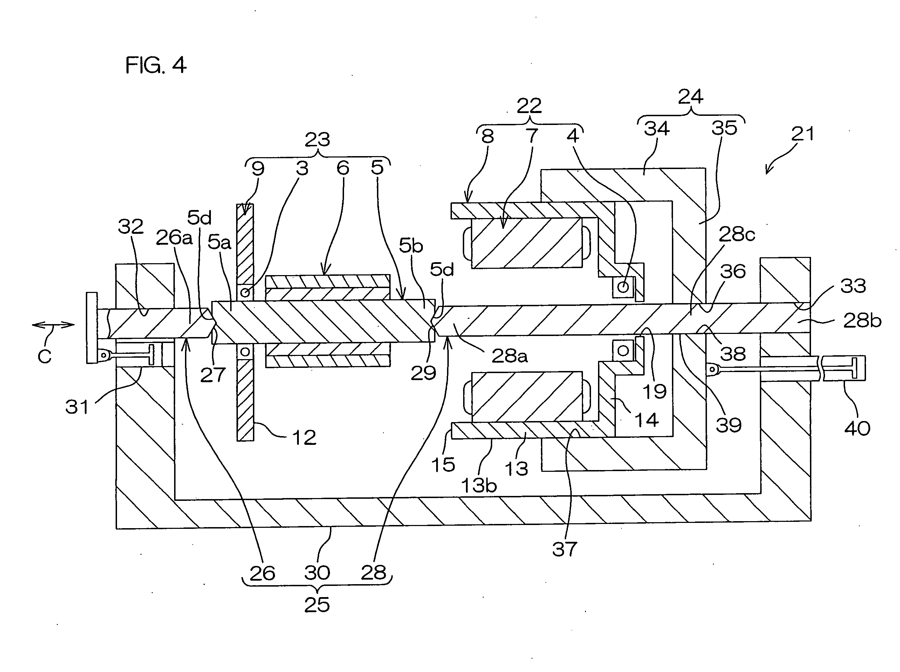

A manufacturing device 21 for the electric motor 1 shall now be described. Fig. 2, Fig. 3, Fig. 4, Fig. 5, and Fig. 6 are partial sectional views showing the general construction of the manufacturing device 21 in accordance to the order of the assembly, with parts being illustrated schematically. Fig. 4 shall be referred to first.

With this manufacturing device 21, the electric motor 1 is assembled by assembling together the first and second subassemblies 22 and 23. The first subassembly 22 is arranged by assembling together the main housing body 8, the stator 7, and the second bearing 4. The second subassembly 23 is arranged by assembling together the output shaft 5, the rotor 6, the end member 9, and the first bearing 3.

This manufacturing device 21 has a first holding member 24 enabled to hold the first subassembly 22 via the main housing body 8, and a second holding member 25 enabled to hold the second subassembly 23 via the first and second end parts 5a and 5b of the output shaft 5. With the present embodiment, the first holding member 24 is supported by the second holding member 25.

The second holding member 25 comprises a first supporting shaft 26, a first shaft end holding part 27 disposed at an end part 26a of the first supporting shaft 26 and enabled to hold the first end part 5a of the output shaft 5, a second supporting shaft 28 insertable through the opening 19 of the base 14 of the main housingbody 8, a second shaft end holding part 29 disposed at an end part 28a of the second supporting shaft 28 and enabled to hold the second end part 5b of the output shaft 5, and a supporting part 30 supporting the first supporting shaft 26 and the second supporting shaft 28 along the same axial line in a manner enabling separation in an axial direction. The supporting part 30 is provided with a pneumatic power cylinder 31 serving as an urging means that urges the first supporting shaft 26 and the second supporting shaft 28 to approach each other.

The supporting part 30 has a first supporting hole 32 supporting the first supporting shaft 26 in a manner enabling advancing and retreating in an axial direction C1, and a second supporting hole 33 supporting the end part 28b of the second supporting shaft 28 in an immovable manner. The supporting part 30 is arranged to be able to make the first subassembly 22 pass between the first shaft end holding part 27 and the second shaft end holding part 29.

The power cylinder 31 can press and urge the first supporting shaft 26 in the axial direction toward the second supporting shaft 28 and can sandwich the output shaft 5 between the first shaft end holding part 27 and the second shaft end holding part 29 in the urged state without play. Also, by relieving the urged state, the interval between both the shaft end holding parts 27 and 29 can be spread to enable attachment/detachment of the output shaft 5 prior to the assembly and after the assembly.

The first shaft end holding part 27 is formed on the end part 26a of the first supporting shaft 26 and comprises a protruding, conically-shaped engaging part that is engageable detachably and yet without play to a center hole as a conical recess 5d of the first end part 5a of the output shaft 5.

The second supporting shaft 28 is a long and columnar member and an intermediate part 28c supports the first holding member 24.

The second shaft end holding part 29 is formed on the end part 28a of the second supporting shaft 28 and comprises a protruding, conically-shaped engaging part that is engageable detachably and yet without play to the center hole as a conical recess 5d of the second end part 5b of the output shaft 5.

The first holding member 24 is formed to have a cylindrical shape with a base and has a cylinder part 34, which is open at one end, and a base 35, which is continuous with the other end of the cylinder part 34. A central part of the base 35 has a through hole 36, through which the second supporting shaft 28 is passed. The cylinder part 34 has a holding part 37 enabled to detachably hold the outer circumference 13b of the cylindrical part 13 of the main housing body 8 concentrically with respect to the second supporting shaft 28. The holding part 37 can hold the cylindrical part 13 at a predetermined holding force by frictionally engaging with the cylindrical part 13 of the main housing body 8, and inadvertent falling off of the main housing body 8 can thereby be prevented, and the main housing body 8 can be removed from the holding part 37 after the assembly by applying a force that exceeds the predetermined holding force.

Also, this manufacturing device 21 has an inner circumference 38 of the through hole 36 of the base 35 of the first holding member 24 and an outer circumference 39 of the intermediate part 28c of the second supporting shaft 28 of the second holding member 25 which are served as a pair of guiding parts that guide the first and second holding members 24 and 25 in an axial direction of the second supporting shaft 28, and a pneumatic power cylinder 40 as a driving part for relative movement of the first and second holding members 24 and 25 that are guided by the pair of guiding parts of the inner circumference 38 and the outer circumference 39. The first and second holding members 24 and 25 are thereby enabled to move relatively in an axial direction of the second supporting shaft 28.

The power cylinder 40 is disposed between the base 35 of the first holding member 24 and the supporting part 30 of the second holding member 25 and can move the first holding member 24 back and forth between a first holding position corresponding to a state prior to assembly wherein the base 35 is set away from the second shaft end holding part 29, and a second holding position corresponding to a state after the assembly wherein the base 35 is set close to the second shaft end holding part 29.

With the manufacturing device 21 according to the present invention, the second supporting shaft 28 is inserted into the opening 19 of the base 14 of the main housing body 8 of the first subassembly 22 which is held by the first holding member 24. The second shaft end holding part 29 disposed on the end part 28a of the second supporting shaft 28 holds the second end part 5b of the output shaft 5, and the first shaft end holding part 27 holds the first end part 5a of the output shaft 5. The output shaft 5 can thus be held in a state in which both ends are held. While maintaining this state in which both ends are held, the first and second holding members 24 and 25 can be moved relatively in an axial direction of the second supporting shaft 28 to assemble together the stator 7 of the first subassembly 22 and the rotor 6 of the second subassembly 23 without putting them in contact with each other. The damage to the rotor 6 and the stator 7 during the assembly can thus be prevented.

A method of manufacturing the electric motor 1 shall now be described in line with the use of the above-described manufacturing device 21.

First, the second bearing 4 and the stator 7 are assembled onto the main housing body 8 to obtain the first subassembly 22. Also, the rotor 6, the first bearing 3 and the end member 9 are assembled onto the output shaft 5 to obtain the second subassembly 23. Either of the first and second subassemblies 22 and 23 may be assembled first.

The first subassembly 22 is then held by the first holding member 24 via the main housing body 8 of the first subassembly 22 and the second subassembly 23 is held by the second holding member 25 via the first and second end parts 5a and 5b of the output shaft 5 of the second assembly 23.

Specifically, as shown in Fig. 2, the first subassembly 22 is passed between the first shaft end holding part 27 and the second shaft end holding part 29, and the first subassembly 22 is made to oppose the open end part of the first holding member 24 that is positioned at the first holding position. The second shaft end holding part 29 of the end part 28a of the second supporting shaft 28 protruding from the central part of the base 35 of the first holding member 24 is inserted into the opening 19 of the base 14 of the main housing body 8 of the first subassembly 22. By fitting the outer circumference 13b of the cylindrical part 13 of the main housing body 8 in the holding part 37 in this state, the first subassembly 22 is held.

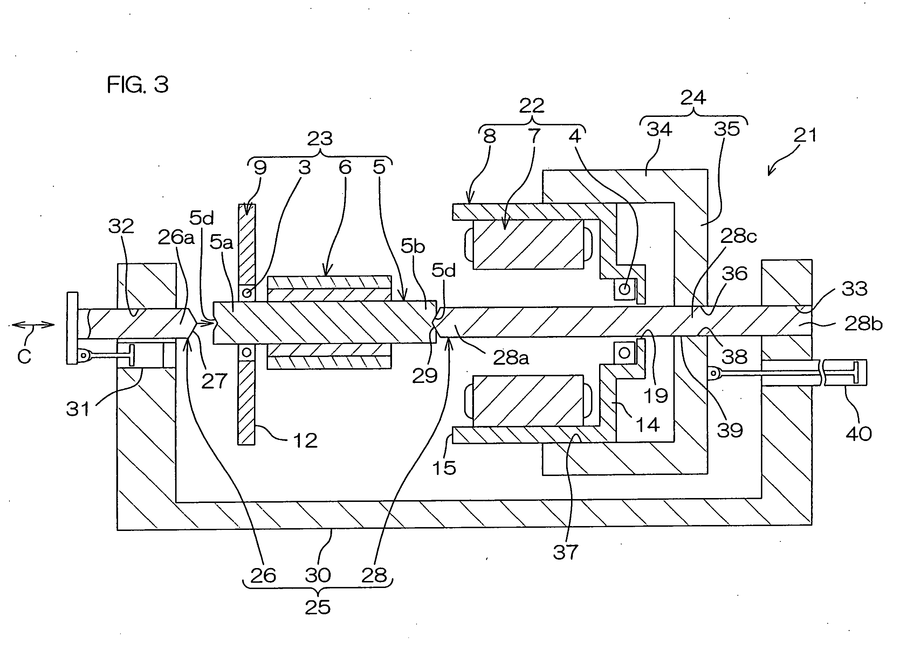

Next, as shown in Fig. 3, the second shaft end holding part 29 of the second supporting shaft 28 which has been inserted through the opening 19 is engaged with the center hole 5d of the second end part 5b of the output shaft 5 of the second subassembly 23. In this state, the first shaft end holding part 27 is made to progress by the power cylinder 31 toward the second shaft end holding part 29 in the axial direction C1 by the power cylinder 31 to narrow the interval between the first shaft end holding part 27 and the second shaft end holding part 29, thereby making the first shaft end holding part 27 engage with the center hole 5d of the first end part 5a of the output shaft 5. As a result, the first and second shaft end holding parts 27 and 29 sandwichingly hold the output shaft 5 of the second subassembly 23 in a state in which both ends are held. The second subassembly 23 is thus held by the second holding member 25.

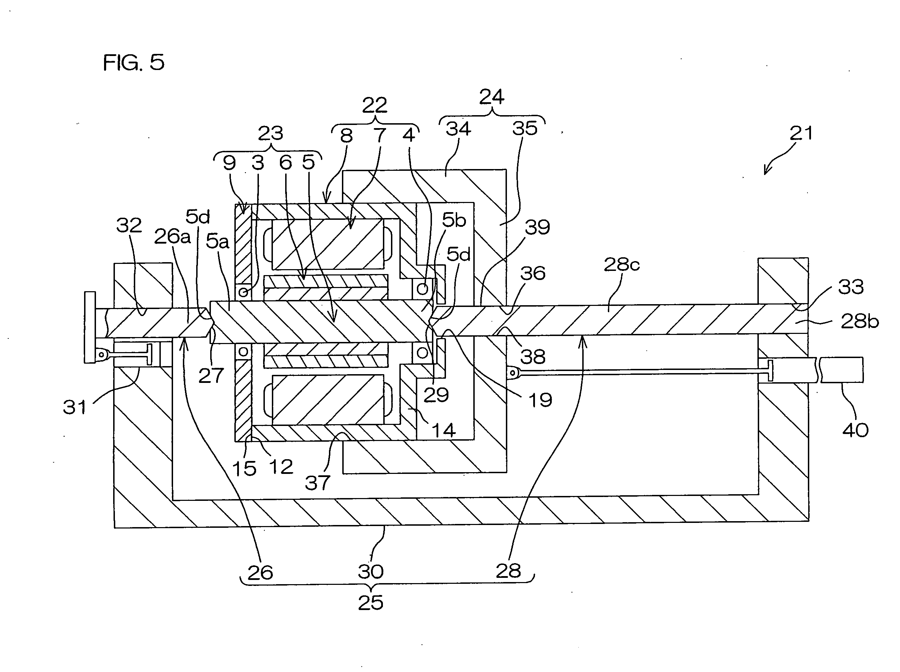

Fig. 4 shall now be referred to. Next, with the second end part 5b of the output shaft 5 being held by the second shaft end holding part 29 of the second supporting shaft 28 of the second holding member 25 which has been inserted through the opening 19 of the base 14 of the main housing body 8, the first and second holding members 24 and 25 are moved relatively along the axial direction C1 by the power cylinder 40 as a driving member and the first and second subassemblies 22 and 23 are assembled together. Specifically, as shown in Fig. 5, as the first holding member 24 moves from the first holding position to the second holding position, the rotor 6 enters the hole at the inner side of the stator 7, the second end part 5b of the output shaft 5 is fitted into and supported by the inner circumference of the second bearing 4, and the connecting parts 12 and 15 of the end member 9 and the main housing body 8 contact each other. By then connecting these connecting parts 12 and 15 together, the assembling of the first and second subassemblies 22 and 23 together is completed.

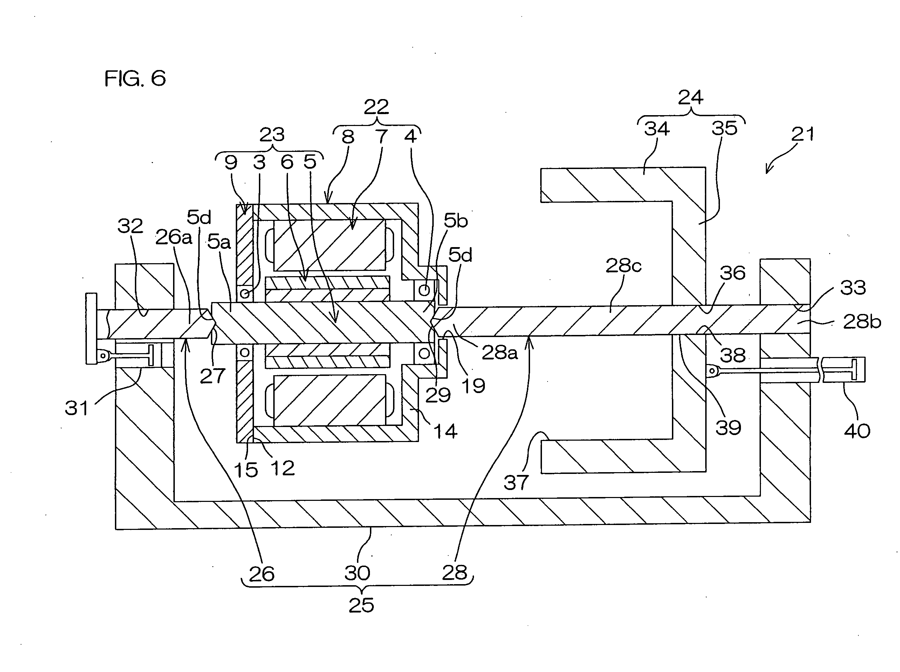

Fig. 6 shall now be referred to. Next, when the power cylinder 40 returns the first holding member 24 to the first holding position, just the first holding member 24 moves and the first subassembly 22 remains without moving so that the first subassembly 22 can be detached from the first holding member 24. The first shaft end holding part 27 of the second holding member 25 is then moved by the power cylinder 31 to spread the distance between the first and second shaft end holding parts 27 and 29 and release the sandwiched state of the output shaft 5. The assembled unit of the first and second subassemblies 22 and 23 can be thereby removed. When the opening 19 is closed by the cover 20 after the removal, the electric motor 1 is completed.

According to this manufacturing method, by assembling the first and second subassemblies 22 and 23 in advance, the assembly of the entirety of the electric motor 1 is facilitated. Also, since the output shaft 5 can be put in the state in which both ends are held as described above, the contacting of the rotor 6 and the stator 7 can be prevented in the process of assembling together the first and second subassemblies 22 and 23, thereby preventing the rotor 6 and the stator 7 from being damaged and doing away with the need to pay strict attention to prevent such a damage.

Though embodiments of the present invention have been described above, the present invention can be carried out in other forms. In the following description, the points of difference with respect to the above-described embodiments shall be described mainly, and for the same constructions, the same reference numerals shall be attached and description shall be omitted.

For example, though the part that is engaged with the first shaft end holding part 27 of the manufacturing device 21 is the center hole 5d of the first end part 5a of the output shaft 5, the present invention is not restricted thereto, and for example, the engaged part may be the outer circumference of the first end part 5a of the output shaft 5. In this case, the first shaft end holding part 27 comprises a recess serving as an engaging part engageable with the outer circumference. Likewise, the second shaft end holding part 29 may comprise a. recess serving as an engaging part engageable with the outer circumference of the second end part 5b of the output shaft 5.

Though the first and second shaft end holding parts 27 and 29 were formed integral to the corresponding first supporting shaft 26 and the second supporting shaft 28, these may be formed separately from the corresponding first supporting shaft 26 and the second supporting shaft 28 and be arranged to be fixed to the corresponding shafts.

Also, the cover 20 may be a plug that is detachable with respect to the opening 19 or may be an adhesive tape that can block the opening 19.

Also, though the first holding member 24 of the manufacturing device 21 was supported and guided by the second supporting shaft 28, the present invention is not limited thereto, and the first holding member 24 may be supported by a supporting member (not shown) of a different member from that of the second supporting shaft 28 or may be guided in the axial direction of the second supporting shaft 28 by a guide member (not shown) of a different member from that of the second supporting shaft 28.

Also, though the electric motor 1 has the magnet 17 disposed on the rotor 6, the magnet may be disposed on the stator 7.

While the invention has been described in detail with respect to specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims'and any equivalents thereto.

The present application corresponds to a Japanese Patent Application No. 2003-400138 filed with the Japan Patent Office on November 28, 2003, the disclosure of which is incorporated hereinto by reference.

## Claims

1. An electric motor (1) comprising:
a housing (2), the housing (2) comprising a main housing body (8) and an end member (9), the main housing body (8) including a cylindrical part (13) having first and second end parts (13c, 13d) , and a base (14) continuous with the second end part (13d) of the cylindrical part (13), the cylindrical part (13) and the base (14) being formed integrally in one piece, the end member (9) being mounted to the first end part (13c) of the cylindrical part (13);
a stator (7) fixed to the inner circumference (13a) of the cylindrical part (13) of the main housing body (8);
first and second supporting parts (11, 16) disposed at the end member (9) and the base (14) of the main housing body (8), respectively;
an output shaft (5) having first and second end parts (5a, 5b), the first and second end parts (5a, 5b) being supported by the first and second supporting parts (11, 16) via first and second bearings (3, 4), respectively;
a rotor (6) disposed in an integrally rotatable manner on the output shaft (5);
an opening (19) formed at a central part of the base (14) of the main housing body (8); and
a cover (20) opposing the second end part (5b) of the output shaft (5) and covering the opening (19).

2. A method for manufacturing an electric motor comprising:
a housing (2) , the housing (2) comprising a main housing body (8) and an end member (9) , the main housing body (8) including a cylindrical part (13) having first and second end parts (13c, 13d), and a base (14) continuous with the second end part (13d) of the cylindrical part (13), the cylindrical part (13) and the base (14) being formed integrally in one piece, and the end member (9) being mounted to the first end part (13c) of the cylindrical part (13);
a stator (7) fixed to the inner circumference (13a) of the cylindrical part (13) of the main housing body (8);
first and second supporting parts (11, 16) disposed at the end member (9) and the base (14) of the main housing body (8), respectively;
an output shaft (5) having first and second end parts (5a, 5b)-, the first and second end parts (5a, 5b) being supported by the first and second supporting parts (11, 16) via first and second bearings (3, 4), respectively;
a rotor (6) disposed in an integrally rotatable manner on the output shaft (5);
an opening (19) formed at a central part of the base (14) of the main housing body (8); and
a cover (20) opposing the second end part (5b) of the output shaft (5) and covering the opening (19);
the method comprising:
a step of holding a first subassembly (22) in which the main housing body (8), the stator (7) and the second bearing (4) are assembled together, via the main housing body (8) by a first holding member (24) and holding a second subassembly (23), in which the output shaft (5), the rotor (6), the end member (9) and the first bearing (3) are assembled together, via the first and second end parts (5a, 5b) of the output shaft (5) by a second holding member (25); and
a step of moving the first and second holding members (24, 25) relatively, in a state wherein the second end part (5b) of the output shaft (5) is held by an end part (28a) of a supporting shaft (28) ofthesecondholdingmember (25) that has been inserted through the opening (19) of the base (14) of the main housing body (8), to assemble together the first and second subassemblies (22, 23).

3. The electric motor manufacturing method according to Claim 2, wherein
the first and second holding members (24, 25) are moved relatively in an axial direction (C1) of the supporting shaft (28) by a driving member (40).

4. The electric motor manufacturing method according to Claim 2 or 3, wherein
a movement of the first holding member (24) with respect to the second holding member (25) is guided by the second holding member (25).

5. The electric motor manufacturing method according to Claim 2, 3, or 4, wherein
the second holding member (25) comprises a first supporting shaft (26) and a second supporting shaft (28), and the first and second supporting shafts (26, 28) are relatively movable along the same axial line.

6. The electric motor manufacturing method according to Claim 5, wherein
the first holding member (24) comprises a cylinder part (34) , one end of which is open, and
the cylindrical part (13) of the main housing body (8) of the electric motor (1) is fitted into an inner circumference of the cylinder part (34).

7. The electric motor manufacturing method according to Claim 6, wherein
the first holding part (24) has a base (35) that closes another end of the cylinder part (34),
a through hole (36), through which the second supporting shaft (28) of the second holding member (25) is inserted, is formed at a central part of the base (35), and
a movement of the first holding member (24) with respect to the second holding member (25) is guided by the second supporting shaft (28) of the second holding member (25).

8. The electric motor manufacturing method according to any one of Claims 2 through 7, wherein
the first and second shaft end holding parts (27, 28) have conical protrusions, and
the second subassembly (23) is held by an engagement of the conical protrusions with conical recesses (5d) for positioning, formed in the first and second end parts (5a, 5b) of the output shaft (5) of the second subassembly (23).

9. A device for manufacturing an electric motor comprising:
a housing (2), the housing (2) comprising a main housing body (8) and an end member (9), the main housing body (8) including a cylindrical part (13) having first and second end parts (13c, 13d) , and a base (14) continuous with the second end part (13d) of the cylindrical part (13), the cylindrical part (13) and the base (14) being formed integrally in one piece, and the end member (9) being mounted to the first end part (13c) of the cylindrical part (13);
a stator (7) fixed to the inner circumference (13a) of the cylindrical part (13) of the main housing body (8);
first and second supporting parts (11, 16) disposed at the end member (9) and the base (14) of the main housing body (8), respectively;
an output shaft (5) having first and second end parts (5a, 5b), the first and second end parts (5a, 5b) being supported by the first and second supporting parts (11, 16) via first and second bearings (3, 4), respectively;
a rotor (6) disposed in an integrally rotatable manner on the output shaft (5);
an opening (19) formed at a central part of the base (14) of the main housing body (8); and
a cover (20) opposing the second end part (5b) of the output shaft (5) and covering the opening (19);
the device comprising:
a first holding member (24) enabled to hold, via the main housing body (8), a first subassembly (22) in which the main housing body (8), the stator (7) and the second bearing (4) are assembled together; and
a second holding member (25) enabled to hold, via the first and second end parts (5a, 5b) of the output shaft (5) , a second subassembly (23) in which the output shaft (5), the rotor (6), the end member (9) and the first bearing (3) are assembled together;
the second holding member (25) comprising a first shaft end holding member (27) enabled to hold the first end part (5a) of the output shaft (5), a second supporting shaft (28) insertable into the opening (19) of the base (14) of the main housing body (8), and a second shaft end holding part (29) disposed on an end part (28a) of the second supporting shaft (28) and enabled to hold the second end part (5b) of the output shaft (5); and
the first and second holding members (24, 25) being movable relatively in an axial direction (C1) of the second supporting shaft (28).

10. The electric motor manufacturing device according to Claim 9, further comprising
a driving member (40) for moving relatively the first and second holding members (24, 25) in the axial direction (C1) of the second supporting shaft (28).

11. The electric motor manufacturing device according to Claim 9 or 10, wherein
a movement of the first holding member (24) with respect to the second holding member (25) is guided by the second holding member (25).

12. The electric motor manufacturing device according to Claim 9, 10, or 11, wherein
a second holding member (25) comprises a first supporting shaft (26), a second supporting shaft (28), and a supporting part (30) supporting the first supporting shaft (26) and the second supporting shaft (28) in a manner enabling relative movement along the same axial line.

13. The electric motor manufacturing device according to Claim 12, wherein
the first holding member (24) comprises a cylinder part (34), one end of which is open, and
a holding part (37) for fitting and holding the cylindrical part (13) of the main housing body (8) of the electric motor (1) is formed in an inner circumference of the cylinder part (34).

14. The electric motor manufacturing device according to Claim 13, wherein
the first holding part (24) has a base (35) that closes another end of the cylinder part (34),
a through hole (36), through which the second supporting shaft (28) of the second holding member (25) is inserted, is formed at a central part of the base (35); and
a movement of the first holding member (24) with respect to the second holding member (25) is guided by the second supporting shaft (28) of the second holding member (25).

15. The electric motor manufacturing device according to any one of Claims 9 through 14, wherein
the first and second shaft end holding parts (27, 29) have conical protrusions which are engageable with conical recesses (5d) for positioning, formed in the first and second end parts (5a, 5b) of the output shaft (5) of the second subassembly (23).
